(19) Europäisches Patentamt
European Patent Office
Office européen des brevets

(11) **EP 2 082 852 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
**G05B 23/02** *(2006.01)* **G05B 19/423** *(2006.01)*
**B25J 9/16** *(2006.01)*

(21) Anmeldenummer: **09000152.0**

(22) Anmeldetag: **08.01.2009**

(54) **Verfahren und Vorrichtung zur Überwachung eines Manipulators**

Method and device for monitoring a manipulator

Procédé et dispositif de surveillance d'un manipulateur

(84) Benannte Vertragsstaaten:
**DE FR IT**

(30) Priorität: **24.01.2008 DE 102008005926**

(43) Veröffentlichungstag der Anmeldung:
**29.07.2009 Patentblatt 2009/31**

(73) Patentinhaber: **KUKA Roboter GmbH**
**86165 Augsburg (DE)**

(72) Erfinder: **Schreiber, Günter, Dr.**
**86316 Friedberg-Derching (DE)**

(74) Vertreter: **Schlotter, Alexander Carolus Paul**
**Wallinger Ricker Schlotter Tostmann**
**Patent- und Rechtsanwälte**
**Zweibrückenstrasse 5-7**
**80331 München (DE)**

(56) Entgegenhaltungen:
EP-A1- 0 901 054        EP-A2- 0 159 131
EP-A2- 1 600 833        WO-A1-01/61618
WO-A2-2006/102517    DE-A1- 10 236 844
DE-A1-102004 042 489

**Beschreibung**

Die vorliegende Erfindung betrifft ein Verfahren zur Überwachung eines Manipulators, insbesondere eines Roboters, sowie eine Vorrichtung zur Durchführung eines solchen Verfahrens.

Bei Manipulatoren, insbesondere bei Robotern, wird üblicherweise eine Zustandsgröße überwacht, indem ein Istwerte der Zustandsgröße bestimmt und mit einem Sollwert verglichen wird. Liegt ein Istwert außerhalb eines zulässigen Toleranzbereiches um den Sollwert, wird beispielsweise eine Alarmmeldung ausgegeben und der Manipulator angehalten. Ein bekanntes Beispiel einer solchen Überwachung ist die sogenannte Schleppfehler-Überwachung, bei der überprüft wird, ob der Schleppfehler zwischen einer Soll- und einer Ist-Position eines ausgezeichneten Manipulatorpunktes oder zwischen einer Soll- und einer Ist-Stellung der Manipulatorgelenke innerhalb vorgegebener Fehlerschranken liegt.

Diese Toleranzbereiche sind üblicherweise für sogenannte Freiraumbewegungen des Manipulators spezifiziert und erprobt. Tritt der Manipulator jedoch mit seiner Umgebung in Kontakt, indem beispielsweise sein Arbeitspunkt ein Werkstück, eine Roboterzelle oder ein unbekanntes Hindernis berührt, so sind solche Toleranzbereiche häufig nicht geeignet, eine solche Interaktion geeignet zu überwachen. Während beispielsweise beim Abfahren einer Transportbahn Positionsabweichungen in jeder Richtung in der Größenordnung weniger Millimeter tolerierbar sind, würde eine gegenüber einer eine Werkstückoberfläche berührenden Soll-Position eines Arbeitspunktes um einen Millimeter zum Werkstück hin verschobene Ist-Position bereits ein unerlaubtes Eindringen des Manipulators in das zu bearbeitende Werkstück darstellen. Auf der anderen Seite können beim Kontaktieren kurzzeitig Kraftstöße auftreten, die einen üblichen Toleranzbereich bei Freiraumbewegungen überschreiten.

Wählt man nun als Toleranzbereich für Freiraum- und Kontaktzustand einheitlich den Toleranzbereich für einen der beiden Zustände, so ist dieser für den anderen Zustand nicht optimal. Beispielsweise erfordert der ein Eindringen in ein Werkstück verhindernde enge Positionstoleranzbereich eine unnötige Präzision beim Abfahren einer Transportbahn, das Zulassen von beim Kontaktieren auftretenden Kraftstößen kann dazu führen, dass im Freiraumbetrieb unzulässig hohe Kräfte nicht erkannt werden.

Die EP 1 600 833 A2 betrifft ein Verfahren zum Betreiben einer Maschine, wie eines Industrieroboters. Ziel ist es, eine Sicherheit der beweglichen Elemente einer Maschine, insbesondere eines Roboters, zu erhöhen. Dazu wird vorgeschlagen, während einer Referenzfahrt der Maschine charakteristische Betriebswerte zu messen und als Referenzwerte zu speichern. In einem nachfolgenden Betrieb der Maschine werden ebenfalls diese Betriebswerte erfasst und mit den Referenzwerten verglichen. Wenn Abweichungen zwischen den aktuellen Betriebswerten und den Referenzwerten festgestellt werden, kann die Maschine angehalten werden.

Die WO 01/61618 A1 betrifft ein Verfahren zum Teachen eines Roboters mit Bewegungsgrenzen. Ziel ist es, einen Teach-Prozess zu vereinfachen, insbesondere so dass eine Belastung des Programmierers zum Einhalten verschiedener Nebenbedingungen verringert wird. Dazu wird vorgeschlagen, eine vorgegebene räumliche Beziehung zwischen der Robotergriff und dem Werkstück zu speichern, eine Bewegung mit dem Roboter durchzuführen, diese Bewegung als Referenzbewegung zu speichern sowie die Referenzbewegung dazu zu nutzen, Bewegungsbefehle zu erzeugen und während des Betriebs die räumliche Beziehung zwischen Robotergriff und Werkstück zu überwachen, um eine Abweichung feststellen zu können.

Die WO 2006/102517 A2 betrifft ein Verfahren zur Planung und Steuerung einer Trajektorie auf Basis einer Toleranz. Ziel ist es, insbesondere eine Zufuhr von Betriebsmitteln oder Verarbeitungsmitteln zu steuern und dabei durch die Verwendung von Toleranzen ein besseres Ergebnis zu erzielen. Dazu wird vorgeschlagen, ein Zielpfad durch eine Mehrzahl von Stützstellen zu modellieren.

Die EP 0 159 131 A2 betrifft ein Robotersteuerungssystem. Ziel ist es, für einen Roboter eine Positions- und Kraftregelung mit einer hohen Präzision zu ermöglichen. Dazu wird von einer typischen Roboterumgebung mit einem Roboter und einer entsprechenden Steuerung ausgegangen. Durch die vorgeschlagene Regelung wird zum Beispiel eine Peg-in-Hole-Anwendung realisiert.

Aufgabe der vorliegenden Erfindung ist es, eine Überwachung eines Manipulators zu verbessern.

Diese Aufgabe wird durch ein Verfahren mit den Merkmalen des Anspruchs 1 gelöst. Anspruch 9 stellt eine Steuervorrichtung zur Durchführung eines solchen Verfahrens unter Schutz, die Ansprüche 10 und 11 ein entsprechendes Computerprogramm bzw. Computerprogrammprodukt. Vorteilhafte Weiterbildungen sind Gegenstand der Unteransprüche.

Die vorliegender Erfindung schlägt allgemein vor, den Toleranzbereich anzupassen, wenn der Manipulator mit der Umgebung in Kontakt tritt.

Hierzu wird bei einem erfindungsgemäßen Verfahren zur Überwachung eines Manipulators, insbesondere eines Roboters einerseits ein Soll-Wert einer Zustandsgröße des Manipulators bestimmt. Dies kann gleichermaßen vorab, beispielsweise durch manuelles Teachen oder eine offline-Programmierung, oder während des Betriebs, beispielsweise durch einen Interpolator einer Manipulatorsteuerung erfolgen.

Eine Zustandsgröße kann dabei eine oder mehrere Positionen umfassen, insbesondere eine Lage und/oder Orientierung eines Referenzpunktes des Manipulators, beispielsweise des sogenannten "tool center points" (TCP), beschrieben etwa durch kartesische Koordinaten und Euler- oder Kardanwinkel, Denavit-Hartenberg-Parameter oder dergleichen. Zusätzlich oder alternativ kann die Zustandsgröße auch eine oder mehrere Gelenkpositionen, insbesondere Gelenkwinkel, umfassen. Positionen können damit gleichermaßen im Anschauungs- bzw. kartesischen Raum und/oder im Konfigurations- bzw. Gelenkraum angegeben sein. Dabei kann bekanntlich jede Position im Konfigurationsraum durch Vorwärtskinematik eindeutig auf eine Position im kartesischen Raum transformiert werden, jede Position im kartesischen Raum durch Lösen der Rückwärtskinematik auf eine Position im Konfigurationsraum, wobei zur Eindeutigkeit bei singulären Positionen im kartesischen Raum gegebenenfalls zusätzliche Nebenbedingungen vorgegeben werden müssen.

Beispielsweise zum Abfahren von Bearbeitungsbahnen und zum Vermeiden von Rucken kann auch eine Soll-Geschwindigkeit oder Soll-Beschleunigung vorgegeben sein. Daher kann eine Zustandsgröße auch eine ein- und/oder mehrfache Ableitung einer oder mehrere solcher Positionen nach der Zeit umfassen.

Insbesondere bei einer modellbasierten Regelung, bei der die zur Umsetzung einer gewünschten Bewegung erforderlichen Kräfte aus einem statischen oder dynamischen Ersatzmodell des Manipulators bestimmt werden, oder bei einer Steifigkeitsregelung, bei der die erforderlichen Kräfte aus einem Positionsschleppfehler zwischen einer Soll- und einer Ist-Position anhand eines Kraftgesetztes bestimmt werden, kann die Zustandsgröße zusätzlich oder alternativ zu Positionen und/oder deren Zeitableitungen eine oder mehrere Kräfte umfassen. Insbesondere kann die Zustandsgröße auch eine oder mehrere antiparallele Kräftepaare, i.e. Drehmomente umfassen. Zur Vereinfachung werden Drehmomente vorliegend ebenfalls als Kraft bezeichnet, so dass beispielsweise ein Kraftsensor auch einen Drehmomentsensor umfasst. Kräfte können ebenfalls gleichermaßen im Anschauungs- bzw. kartesischen Raum und/oder im Konfigurations- bzw. Gelenkraum angegeben sein. So kann eine Kraft im Konfigurationsraum, etwa ein Drehmoment eines Gelenkantriebes, eindeutig auf Kräfte im kartesischen Raum transformiert werden, eine Kraft im kartesischen Raum durch Multiplikation mit der transponierten Jacobimatrix auf Kräfte im Konfigurationsraum, etwa entsprechende Drehmomente in den Gelenken.

Bei einem erfindungsgemäßen Verfahren wird weiter ein Ist-Wert der Zustandsgröße bestimmt. Dies kann beispielsweise durch Messen der Zustandsgröße, etwa von Gelenkwinkeln und/oder in den Gelenken wirkenden Gelenkkräften, gegebenenfalls zusätzlich durch Umrechnen, beispielsweise in TCP-Koordinaten oder auf Antriebe wirkende Reaktionskräfte erfolgen. Dabei können durch die Vorwärtskinematik, insbesondere durch Multiplikation mit der Jacobimatrix bzw. deren Inversen, auch im Konfigurationsraum gemessene Größen in den kartesischen Raum transformiert werden und umgekehrt. Elemente der Zustandsgröße, insbesondere nicht direkt messbare, können beispielsweise auch mittels eines Beobachters, i.e. eines mathematischen Ersatzmodells des Manipulators, bestimmt werden.

Dann wird bestimmt, ob der Ist-Wert innerhalb eines vorgegebenen Toleranzbereiches um den Soll-Wert liegt. Ist dies nicht der Fall, können entsprechende Maßnahmen eingeleitet werden, beispielsweise eine Alarmmeldung ausgegeben, der Manipulator stillgesetzt, eine Ausweichbahn abgefahren, der Manipulator weich geschaltet, i.e. Koeffizienten einer Regelung reduziert werden, oder dergleichen. Dabei können gleichermaßen ein Fehlersignal ausgegeben und infolge solche Maßnahmen eingeleitet werden, wenn festgestellt wird, dass der Ist-Wert nicht innerhalb des vorgegebenen Toleranzbereiches liegt, oder es kann umgekehrt ein Funktionssignal ausgegeben werden, wenn festgestellt wird, dass der Ist-Wert innerhalb des vorgegebenen Toleranzbereiches liegt, so dass solche Maßnahmen bei Abwesenheit bzw. Ausbleiben des Funktionssignals eingeleitet werden.

Erfindungsgemäß wird nun der vorgegeben Toleranzbereich verändert, wenn in einen Kontaktmodus umgeschaltet wird. Hierdurch ist es vorteilhaft möglich, einen ersten Toleranzbereich zu verwenden, solange der Manipulator nicht mit der Umwelt interagiert, und wenigstens einen hiervon abweichenden zweiten Toleranzbereich für den Fall einer Interaktion mit der Umgebung vorzusehen. Somit können die verschiedenen Toleranzbereiche besser an die jeweiligen Bedingungen angepasst werden.

Dabei umfasst ein Kontaktieren der Umgebung bzw. ein Kontakt des Manipulators mit der Umgebung den Fall, dass ein oder mehrere Glieder des Manipulators, insbesondere ein oder mehrere ausgezeichnete Punkte, etwa ein Arbeits- oder Referenzpunkt, eine Arbeitslinie oder eine Arbeitsfläche, in Kontakt mit der Umgebung kommen bzw. stehen, i.e. einen Normalabstand gleich Null wird bzw. ist.

In einer bevorzugten Ausführung der vorliegenden Erfindung kann wahlweise in verschiedene Kontaktmodi geschaltet werden, wodurch der vorgegebene Toleranzbereich in unterschiedlicher Weise geändert wird. So kann beispielsweise ein erster Kontaktmodus für einen positionellen Kontakt vorgesehen sein, bei dem der Manipulator im Kontaktpunkt bzw. den Kontaktpunkten aktiv keine Kraft übertragen, sondern die Umgebung nur ohne Kraftbeaufschlagung berühren soll und es im Wesentlichen nur durch Ungenauigkeiten in der Regelung oder dergleichen Kraftstöße auf den Manipulator ausgeübt werden, wenn dieser die Umgebung kontaktiert. Zusätzlich oder alternativ kann ein zweiter Kontaktmodus für einen aktiven Kraftstoß vorgesehen sein, in dem der Manipulator im Kontaktpunkt bzw. den Kontaktpunkten aktiv eine Kraft auf die Umgebung ausüben soll, um beispielsweise einen Werkzeugvorschub in ein Werkstück zu bewirken. Zusätzlich oder alternativ kann ein dritter Kontaktmodus für einen aktiven Kraftverlauf vorgesehen sein, in dem der Manipulator im Kontaktpunkt bzw. den Kontaktpunkten aktiv eine Kraft auf die Umgebung ausüben soll, die sich über der Zeit in einer vorgegebenen Weise verändert, beispielsweise eine schwellende oder wechselnde Kraft ausüben soll, um bei einer Fügeoperation Verklemmungen zu verhindern oder zu überwinden.

Ein Umschalten in den Kontaktmodus kann beispielsweise, etwa über eine Steuerung, vorab eingegeben und abgespeichert werden. So kann beispielsweise bei der Eingabe einer abzufahrenden Bahn, beispielsweise durch off-line-Programmierung oder das sogenannte Teachen, i.e. das Anfahren und Abspeichern von Bahnpunkten, durch Eingabe eines Befehls in die Steuerung an einem bestimmten Bahnpunkt in einen Kontaktmodus umgeschaltet werden, da an diesem Bahnpunkt ein Kontakt des Manipulators mit der Umgebung unmittelbar bevorsteht oder stattfindet. Auch bei der direkten Steuerung eines Manipulators, beispielsweise eines nachgiebig geregelten Manipulators, durch einen Bediener kann dieser durch Eingabe eines entsprechenden Befehls, beispielsweise Betätigen einer Taste, Bedienen einer Robotersteuerung oder dergleichen, bei unmittelbar bevorstehendem oder gerade stattfindendem Kontakt des Manipulators mit der Umgebung in einen Kontaktmodus umschalten. Ein solcher nachgiebiger Manipulator kann beispielsweise durch eine entsprechend weiche Proportional-Einzelgelenkwinkel-Regelung oder durch eine modellbasierte Gravitationskompensation realisiert sein, bei der dem Manipulator die Antriebskräfte aufgeschaltet werden, die gerade seine Gravitationskräfte, gegebenenfalls auch Reibungs- und/oder Trägheitskräfte kompensieren. In den Kontaktmodus kann gleichermaßen in Abhängigkeit eines Sensorsignals umgeschaltet werden. So kann beispielsweise anhand einer Lichtschranke oder eines Abstandssensors erkannt werden, dass ein Kontakt des Manipulators mit der Umgebung unmittelbar bevorsteht, und dann in einen Kontaktmodus umgeschaltet werden.

Durch ein solches automatisches, vorab gespeichertes oder durch einen Bediener ausgeführtes Umschalten in einen Kontaktmodus kann dann beim Kontakt des Manipulators mit der Umgebung ein anderer Toleranzbereich berücksichtigt und so die Überprüfung des Manipulators situationsangepasst durchgeführt werden.

Insbesondere kann der vorgegeben Toleranzbereich vergrößert oder verkleinert werden, wenn in einen Kontaktmodus umgeschaltet wird. Beispielsweise können beim Kontaktieren der Umgebung Kraftstöße auf den Manipulator auftreten, die aus dem Abbremsen des trägen Manipulators durch die Umgebung resultieren. Ist der Manipulator in Kontakt mit der Umgebung, soll er je nach Aufgabenstellung aktiv Kräfte auf diese ausüben, was zu entsprechenden Reaktionskräften auf den Manipulator führt. Solche Kraftstöße oder Reaktionskräfte können die üblicherweise im kontaktfreien oder Freiraumbetrieb auftretenden Kräfte übersteigen, so dass in einer Ausführung der vorliegenden Erfindung ein Toleranzbereich für eine oder mehrere Kräfte vergrößert wird, wenn in einen Kontaktmodus umgeschaltet wird. Treten dann im Kontaktmodus solche höheren Kraftstöße oder Reaktionskräfte auf, werden diese von der Überwachung nicht als unzulässig bewertet. Gleichzeitig stellt die Überwachung sicher, dass Kräfte, die außerhalb des nicht vergrößerten Toleranzbereichs liegen, als unzulässig erkannt werden, wenn nicht in einen Kontaktmodus umgeschaltet ist, da solche höheren Kräfte bei freien Bewegungen im Regelfall nicht auftreten dürfen.

Zusätzlich oder alternativ kann ein Positionstoleranzbereich in einem Kontaktmodus vergrößert oder verkleinert werden. Während beispielsweise beim raschen Abfahren einer Transportbahn aufgrund von Massenträgheiten und dergleichen auch größere Positionsfehler akzeptabel sind, soll in einem Kontaktmodus verhindert werden, dass der Manipulator in ein Werkstück eindringt oder den Kontakt beim Bearbeiten löst. Dies kann über eine Verkleinerung des Toleranzbereiches für eine oder mehrere Positionen, wenn in einen Kontaktmodus umgeschaltet wird, erreicht werden.

In einer besonders bevorzugten Ausführung der vorliegenden Erfindung wird der vorgegeben Toleranzbereich asymmetrisch um den Soll-Wert verändert, wenn in einen Kontaktmodus umgeschaltet wird. Denn während bei kontaktfreien Bewegungen Abweichungen zwischen Soll- und Ist-Werten im Wesentlichen statistisch verteilt sind und hier deshalb bevorzugt ein symmetrischer Toleranzbereich um den Soll-Wert vorgegeben wird, existieren systembedingte Vorzugsrichtungen für Abweichungen, wenn der Manipulator mit der Umgebung in Kontakt kommt bzw. ist.

Trifft beispielsweise ein vorderer Arm eines Gelenkarmroboters mit seiner Spitze von oben auf eine horizontale Umgebungsoberfläche, führt dies zu einem Kraftstoß vertikal nach oben auf den Arm bzw. ein entsprechendes Drehmoment im Gelenk dieses Armes. Um diesem erwarteten, systembedingten Kraftstoß, der sich stets ergibt, wenn der Roboter mit nicht verschwindender Geschwindigkeit die Umgebung kontaktiert, Rechnung zu tragen, kann dann beispielsweise ein Toleranzbereich um ein Solldrehmoment im Gelenk des Armes oder eine Sollkraft in einem Kraftsensor an dessen Spitze einseitig in diese Richtung vergrößert werden. Umgekehrt können beim korrekten Kontakt keine Positionsabweichungen der Spitze zur horizontalen Umgebungsoberfläche hin auftreten, so dass ein Toleranzbereich um eine Sollposition der Spitze in vertikaler Richtung nach unten verkleinert werden kann.

Somit kann ein vorgegeben Toleranzbereich $[x_{soll} - \varepsilon, x_{soll} + \varepsilon]$ insbesondere dadurch asymmetrisch um den Soll-Wert $x_{soll}$ verändert werden, dass eine positive maximal zulässige Abweichung $\varepsilon_{pos} > 0$ von dem Sollwert und eine negative maximal zulässige Abweichung $\varepsilon_{neg} < 0$ von dem Sollwert bestimmt werden, die betragsmäßig ungleich sind ($|\varepsilon_{pos}| \neq |\varepsilon_{neg}|$) und zusammen den veränderten Toleranzbereich

$$[x_{soll} + \varepsilon_{neg}, x_{soll} + \varepsilon_{pos}]$$

derart definieren, dass dieser sich von der Summe xsoll + εneg des Sollwertes und der negativen maximal zulässigen Abweichung εneg, die kleiner Null ist, bis zu der Summe xsoll + εpos des Sollwertes und der positiven maximal zulässigen Abweichung erstreckt. Dies kann insbesondere durch Addition oder Subtraktion von dem gleichen Wert Δε oder von verschiedenen Werten Δε1, Δε2 (|Δε2| ≠ |Δε1|) zu bzw. von beiden Grenzwerten eines vorgegebenen, zu einem Sollwert xsoll symmetrischen Toleranzbereiches [xsoll - ε, xsoll + ε], oder durch Multiplikation der positiven und negativen maximal zulässigen Abweichung ε eines vorgegeben, zu einem Sollwert xsoll symmetrischen Toleranzbereiches [xsoll - ε, xsoll + ε] mit unterschiedlichen Faktoren a, b (|b| ≠ |a|) erfolgen, so dass der vorgegebene Toleranzbereich zu

$$[xsoll - ε, xsoll + ε] \rightarrow [xsoll - ε + Δε, xsoll + ε + Δε],$$

$$[xsoll - ε, xsoll + ε] \rightarrow [xsoll - ε + Δε1, xsoll + ε + Δε2], bzw.$$

bzw.

$$[xsoll - ε, xsoll + ε] \rightarrow [xsoll − a × ε, xsoll + b × ε]$$

verändert wird, wenn in einen Kontaktmodus umgeschaltet wird. Die verschiedenen Faktoren Δε1, Δε2 bzw. a, b können dabei jeweils beide positiv (Δε1, Δε2 > 0 bzw. a, b > 0) oder beide negativ (Δε1, Δε2 < 0 bzw. a, b < 0) sein oder unterschiedliche Vorzeichen aufweisen (Δε1 > 0, Δε2 < 0 oder Δε1 < 0, Δε2 > 0 bzw. a > 0, b< 0 oder a < 0, b > 0), wobei beispielsweise (a, b > 0) einer asymmetrischen Vergrößerung, (a, b < 0) einer asymmetrischen Verkleinerung entspricht.

Tritt oder steht ein Manipulator mit seiner Umgebung in Kontakt, so wirken auf ihn sogenannte Kontaktkräfte. Diese umfassen bei zentral-stoßartigen Kontakten Normalkräfte, bei dezentral-stoßartigen Kontakten oder wenn Reibung im Kontakt auftritt, zusätzlich Tangentialkräfte in der Kontaktebene. Systembedingte Abweichung des Soll- und Ist-Wertes einer Zustandsgröße treten dabei vorwiegen in bzw. entgegen der Richtung solcher Kontaktkräfte auf. So wirkt beim Kontaktieren auf den Manipulator ein Kraftstoß in Richtung der Kontaktkraft, was zu einer Positionsablage in Richtung dieser Kontaktkraft führen kann. In einer bevorzugten Ausführung der vorliegenden Erfindung wird der vorgegebene Toleranzbereich daher in Richtung einer auf den Manipulator wirkenden Kontaktkraft vergrößert oder verkleinert und/oder entgegen der Richtung einer auf den Manipulator wirkenden Kontaktkraft verkleinert oder vergrößert, wenn in einen Kontaktmodus umgeschaltet wird.

Bevorzugt wird der vorgegeben Toleranzbereich über der Zeit verändert, wenn in einen Kontaktmodus umgeschaltet wird. Beispielsweise kann der vorgegeben Toleranzbereich nur für eine bestimmte Zeitdauer verändert und anschließend wieder der (unveränderte) vorgegebene Toleranzbereich verwendet werden, wenn in einen Kontaktmodus umgeschaltet wird. Dies ist insbesondere dann zweckmäßig, wenn der Manipulator in Kontakt mit der Umgebung treten soll, ohne aktiv Kräfte auf diese auszuüben. In diesem Fall kann in einer bevorzugten Ausführung der vorliegenden Erfindung der Toleranzbereich nur kurzzeitig für die Zeit verändert werden, in der der Kraftstoß beim Kontaktieren erwartet wird. Hierzu kann in den vorgenannten ersten Kontaktmodus umgeschaltet werden.

In einer Weiterbildung kann ein solcher erster Kontaktmodus weiter parametriert werden - insbesondere kann die Höhe und/oder Zeitdauer des erwarteten Kraftstoßes und/oder die dabei maximal erlaubte Positionsablage vorgegeben und der Toleranzbereich für diese Größen entsprechend verändert werden, wenn in den ersten Kontaktmodus umgeschaltet wird. Hierzu kann beispielsweise ein Kommando "Erwarte passiven Kraftstoß" vom Bediener eingegeben werden, wobei optional auch ein oder mehrere der vorstehend erläuterten Parameter vorgegeben werden können.

Zusätzlich oder alternativ zu diesem ersten Kontaktmodus kann in den vorstehend erläuterten zweiten Kontaktmodus umgeschaltet werden, indem beispielsweise ein Kommando "Führe aktiven Kraftstoß aus" vom Bediener eingegeben wird, wobei optional wiederum ein oder mehrere Parameter vorgegeben werden können, die neben der Höhe und/oder Zeitdauer des erwarteten Kraftstoßes und/oder der maximal erlaubten Positionsablage beispielsweise eine Schwellzeit definieren, während der der Manipulator eine Kontaktkraft, vorzugsweise entsprechend eines vorgegebenen Verlaufes, beispielsweise sinusförmig, trapezförmig, dreieckförmig oder dergleichen, auf- bzw. abbauen soll. Der Toleranzbereich kann dann so verändert werden, dass eine auf den Manipulator wirkende Kraft mit entsprechendem Zeitverlauf bzw. eine entsprechende Positionsablage als zulässig erkannt wird.

Zusätzlich oder alternativ zu dem ersten und/oder zweiten Kontaktmodus kann in den vorstehend erläuterten dritten Kontaktmodus umgeschaltet werden, indem beispielsweise ein Kommando "Führe Kraftschwingung aus" vom Bediener eingegeben wird. Zusätzlich zu dem oben erläuterten zweiten Kontaktmodus können hier beispielsweise komplexere Figuren des Kraftverlaufes, etwa eine Sinus-, Dreiecks- oder Rechteckschwingung, gekennzeichnet durch ihre Amplitude, Periode und Phase vorgegeben werden. Dies ist insbesondere zum Lösen oder Vermeiden von Verklemmungen während einer Fügeoperation zweckmäßig.

In einer bevorzugten Ausführung der vorliegenden Erfindung umfasst die Zustandsgröße eine Position, wobei der vorgegebene und/oder veränderte vorgegebene Toleranzbereich auf Basis einer Kraft bestimmt wird. Hierzu wird auf Basis eines Kraftgesetz, welches Positionsablagen mit Kräften verknüpft, ein zulässiger Kraftbereich in einen zulässigen Positionsbereich transformiert.

Beispielsweise werden bei einer Steifigkeitsregelung Soll-Gelenkkräfte τsoll, die Antriebe auf die Glieder eines Manipulators ausüben, durch ein, beispielsweise lineares, Kraftgesetz der Form

$$\tau soll = a \times (qsoll - q) \text{ bzw.}$$

bzw.

$$\tau soll = J^T \times a \times (xsoll - x)$$

mit einer Konstanten a, der Soll-Position xsoll bzw. Ist-Position x im kartesischen Raum, die durch die transponierte Jacobimatrix $J^T$ in die Soll-Position qsoll bzw. Ist-Position q im Konfigurationsraum transformiert wird, bestimmt. Auf Basis dieses Kraftgesetztes kann aus einem zulässigen Toleranzbereich [τsoll - ε, τsoll + ε] für eine Soll-Gelenkkraft ein Toleranzbereich für eine Position im kartesischen oder Konfigurationsraum vorgegeben bzw. verändert werden:

$$[qsoll - \varepsilon q, qsoll + \varepsilon q] = [\tau soll - \varepsilon, \tau soll + \varepsilon] \times a^{-1} \text{ bzw.}$$

bzw.

$$[xsoll - \varepsilon x, xsoll + \varepsilon x] = (J^T \times a)^{-1} \times [\tau soll - \varepsilon, \tau soll + \varepsilon]$$

An Stelle des oben erläuterten Toleranzbereiches für eine Gelenkkraft können in gleicher Weise auch aus zulässigen Kräften Fzul im kartesischen Raum vorgegebene bzw. veränderte Toleranzbereiche [qsoll - εq, qsoll + εq] = $(J^T \times a)^{-1} \times$ Fzul für Positionen bestimmt und so in einer Positionsüberwachung berücksichtigt werden.

Weitere Vorteile und Merkmale ergeben sich aus den Unteransprüchen und den Ausführungsbeispielen. Hierzu zeigt, teilweise schematisiert:

Fig. 1:     einen eingliedrigen Roboter mit einer Steuervorrichtung nach einer Ausführung der vorliegenden Erfindung;

Fig. 2:     einen Verlauf eines Gelenkmomentes des Roboters nach Fig. 1;

Fig. 3:     einen Verlauf eines Gelenkwinkels des Roboters nach Fig. 1 ; und

Fig. 4:     den Ablauf eines in der Steuervorrichtung nach Fig. 1 ablaufenden Verfahrens nach einer Ausführung der vorliegenden Erfindung.

Nachfolgend wird ein Verfahren nach einer Ausführung der vorliegenden Erfindung anhand eines stark vereinfachten Beispiels erläutert.

Ein eingliedriger Roboter 1 soll von oben ein elastisches Bauteil 2 in eine Bohrung 3 in der horizontalen Oberfläche eines Werkstückes 4 einführen. Dabei beschreibt der Arm einen Viertelkreis, der entsprechende Gelenkwinkel q nimmt von 90° auf 0° ab.

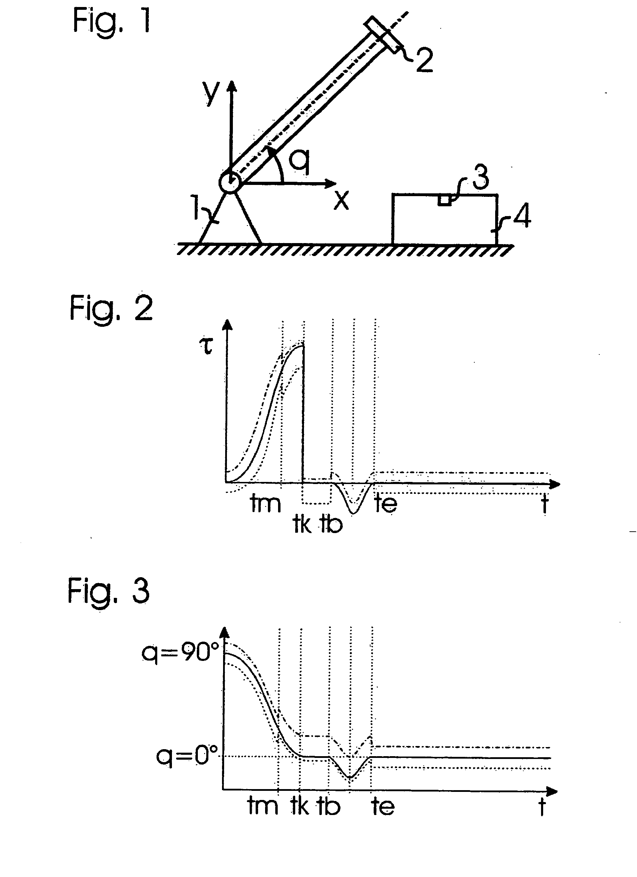

In einer ersten Ausführung wird der Roboter 1 modellbasiert gesteuert. Hierzu ist in der (nicht näher dargestellten) Steuervorrichtung des Roboters 1 ein Ersatzmodell des Roboters hinterlegt, aus dem für die gewünschte Soll-Bahn ein zugehöriger, in Fig. 2 durchgezogen eingezeichneter Soll-Gelenkwinkelverlauf τsoll(t) bestimmt und einer Motorsteuerung eines Antriebsmotors (nicht dargestellt) zugeführt werden kann.

Dabei wächst das Soll-Gelenkmoment zunächst aufgrund des wachsenden Hebelarmes an und wird zu Null, sobald der Arm auf dem Werkstück 4 ruht. Nach einer Pause, in der stoßinduzierte Schwingungen abgeklungen sind, wird das Soll-Gelenkmoment zwischen den Zeitpunkten tb und te negativ, so dass der Roboter von oben auf das Werkstück drückt.

Für die kontaktfreie Bahn (links in Fig. 2) ist symmetrisch um den Soll-Gelenkmomentverlauf τsoll ein Toleranzbereich [τsoll - ετ, τsoll + ετ] vorgegeben.

Wenn der Roboter 1 das Werkstück 4 zu einem Zeitpunkt tk kontaktiert, erfolgt aufgrund der nicht-verschwindenden Normalgeschwindigkeit ein Kraftstoß vertikal nach oben auf den Roboter, der zu einem Gelenkmoment τ führt, welches den für die kontaktfreie Bahn vorgegebenen Toleranzbereich übersteigen würde.

Daher wird, bevor der Roboter zum Zeitpunkt tk in Kontakt mit dem Werkstück 4 tritt, zum Zeitpunkt tm in einen ersten Kontaktmodus "expect impact" umgeschaltet. Hierzu hat ein Bediener vorab während des Teachens der Bahn über die Steuervorrichtung an entsprechender Stelle in der Bahn eine erwartete Höhe $\Delta_{ετ}$ der Gelenkmomentstörung eingegeben, die sich vorliegend etwa aus der maximal zu erwartenden Auftreffgeschwindigkeit und der Masse des Roboterarmes abschätzen lässt. Beim Umschalten in der ersten Kontaktmodus "expect impact" wird daher der oben erläuterte Toleranzbereich für das Gelenkmoment entsprechend

$$[τsoll - ετ, τsoll + ετ] \rightarrow [τsoll - ετ - \Delta ετ, τsoll + ετ - \Delta ετ]$$

verändert. Wie aus Fig. 2, in der der Soll-Gelenkmomentverlauf τsoll durchgezogen, eine negative maximal zulässige Abweichung punktiert und eine positive maximal zulässige Abweichung strichpunktiert dargestellt ist, erkennbar, bewirkt dies eine asymmetrische Verschiebung des Toleranzbereiches in Richtung des durch den Kraftstoß bewirkten Gelenkmomentes. Mithin "darf" während des ersten Kontaktmodus' im Gelenk ein betragsmäßig größeres Drehmoment in Richtung des Kraftstoßes auftreten, ohne dass die Überwachung dies als unzulässig einstuft.

Entsprechend wird während des Drückens des Roboters 1 auf das Werkstück 4 verfahren. Hierzu wird in einen zweiten Kontaktmodus "Impuls" umgeschaltet, in dem der Toleranzbereich zu

$$[τsoll - ετ, τsoll + ετ] \rightarrow [τsoll, τsoll + ετ]$$

verändert wird. D.h., der Roboter darf nicht stärker als mit dem Sollmoment τsoll auf das Werkstück 4 drücken, die Sollkraft darf jedoch geringer sein. Nach Ende der Fügeoperation wird der Toleranzbereich wieder auf die vorgegebenen Werte gesetzt.

In einer alternativen Ausführung ist in der Steuervorrichtung des Roboters 1 eine Steifigkeitsregelung implementiert, mit der der in Fig. 3 durchgezogen dargestellte Soll-Verlauf qsoll des Gelenkwinkels abgefahren und mit dem gemessenen Ist-Winkel q verglichen wird. Ein Soll-Gelenkmoment τsoll des Antriebsmotors wird dann gemäß

$$τsoll = a \times (qsoll - q)$$

aus dem Positionsfehler (qsoll - q) und einer konstanten Steifigkeit a berechnet und einer Motorsteuerung zugeführt.

Wie aus Fig. 3 erkennbar, sieht der Soll-Verlauf qsoll des Gelenkwinkels zunächst ein Absenken des Arms auf das Werkstück 4 zum Zeitpunkt tk vor. Nach einer Pause, in der stoßinduzierte Schwingungen abgeklungen sind, wird zwischen den Zeitpunkten tb und te die Sollposition des Werkstückes virtuell in das Werkstück 4 hinein verlegt. Da der Roboter 1 diesem Verlauf aufgrund des als mechanischer Anschlag wirkenden Werkstückes 4 nicht folgen kann, führt die Steifigkeitsregelung zu einem Soll-Gelenkmoment, mit dem der Roboter 1 das Werkstück 2 wunschgemäß aktiv in die Bohrung 3 einpresst, i.e. an seiner Armspitze aktiv eine Kontaktkraft τsoll/(Armlänge) auf die Umgebung ausübt.

Analog zu der vorstehend beschriebenen Überwachung einer Kraft-(bzw. Drehmoment)-Zustandsgröße wird hier eine Positions-Zustandsgröße überwacht. Hierzu hat der Bediener während des Teachens der Bahn über die Steuervorrichtung eine maximal erlaubte Positionsablage eingegeben, durch die der Gelenkwinkeltoleranzbereich im ersten und zweiten Kontaktmodus asymmetrisch nach oben zu

$$[qsoll - εq + \Delta ε, qsoll + εq + \Delta ε]$$

verschoben wird. Während der Roboter 1 in Kontakt mit dem Werkstück 4 ist, dürfen daher, wie aus Fig. 3 erkennbar, zwar größere Ablagen nach oben vom Werkstück 4 weg, jedoch nur geringe Ablagen nach unten zum Werkstück 4 hin auftreten, da dies einem Eindringen in das Werkstück entspräche. Nach Ende der Fügeoperation wird der Toleranzbereich auch hier wieder auf die vorgegebenen Werte gesetzt.

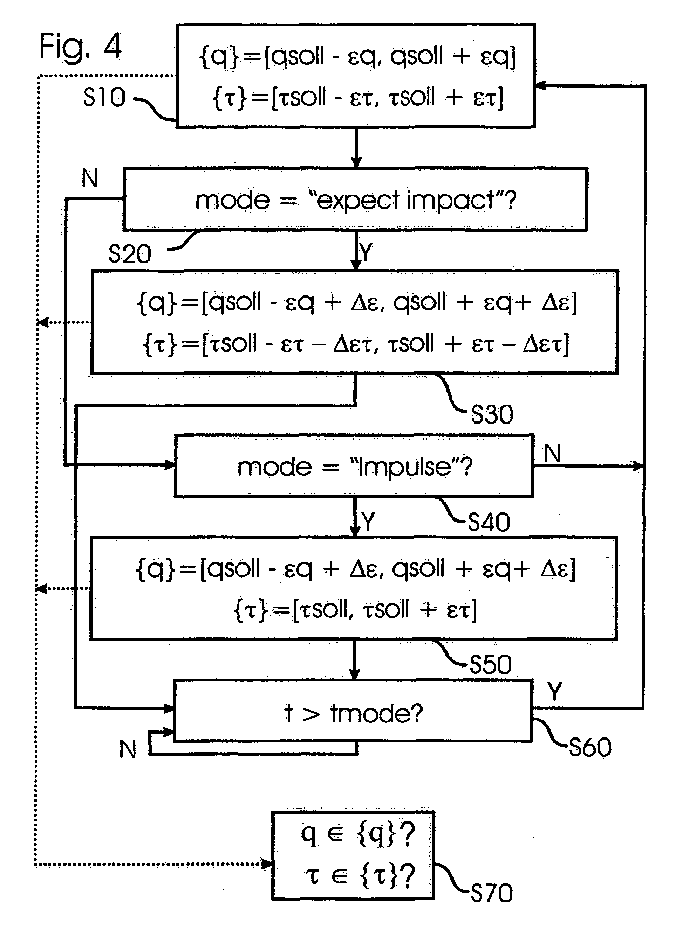

In Fig. 4 ist der Ablauf der oben beschriebenen Verfahren gezeigt. In einem ersten Schritt S10 wird ein Sollwert qsoll bzw. τsoll und ein symmetrischer vorgegebener Toleranzbereich [qsoll - εq, qsoll + εq] bzw. [τsoll - ετ, τsoll + ετ] bestimmt.

Wird an einer vorbestimmten Stelle einer abzufahrenden Bahn oder durch Eingabe eines Bedieners in einen ersten Kontaktmodus "expect impact" umgeschaltet (Schritt S20: "Y"), so wird der Toleranzbereich in einem Schritt S30 wie vorstehend erläutert zu [qsoll - εq + Δε, qsoll + εq + Δε] bzw. [τsoll - ετ - Δετ, τsoll + ετ -Δετ] verändert und mit Schritt S60 fortgefahren.

Wird hingegen an einer vorbestimmten Stelle einer abzufahrenden Bahn oder durch Eingabe eines Bedieners in einen zweiten Kontaktmodus "implus" umgeschaltet (Schritt S40: "Y"), so wird der Toleranzbereich in einem Schritt S50 wie vorstehend erläutert zu [qsoll - εq + Δε, qsoll + εq + Δε] bzw. [τsoll, τsoll + ετ] verändert und mit Schritt S60 fortgefahren.

In diesem Schritt wird eine vorbestimmte Zeitdauer tmode abgewartet und anschließend wieder auf den vorgegebenen Toleranzbereich [qsoll - εq, qsoll + εq] bzw. [τsoll - ετ, τsoll + ετ] zurückgeschaltet, indem das Verfahren zu Schritt S10 zurückkehrt.

Ist auf diese Weise in Schritt S10 und gegebenenfalls S30, S50 ein Toleranzbereich {q} bzw. {τ} bestimmt worden, wird ein Ist-Wert q bzw. τ bestimmt, beispielsweise gemessen, und in einem Schritt S70 bestimmt, ob der Ist-Wert innerhalb eines vorgegebenen Toleranzbereiches um den Soll-Wert liegt, i.e. $q \in \{q\}$ bzw. $\tau \in \{\tau\}$. Ist dies nicht der Fall, werden geeignete Maßnahmen ergriffen, beispielsweise der Roboter stillgesetzt und eine Fehlermeldung ausgegeben (in Fig. 4 nicht dargestellt).

Bezugszeichenliste

1 Roboter
2 elastisches Bauteil 2
3 Bohrung
4 Werkstück
q Gelenkwinkel

**Patentansprüche**

**1.** Verfahren zur Überwachung eines Manipulators, insbesondere eines Roboters (1), mit den Schritten:

Bestimmen eines Soll-Wertes (qsoll; τsoll) einer Zustandsgröße des Manipulators (S10);
Bestimmen eines Ist-Wertes (q; τ) der Zustandsgröße; und
Bestimmen, ob der Ist-Wert innerhalb eines vorgegebenen Toleranzbereiches ({q}; {τ}) um den Soll-Wert liegt (S70);
wobei
der vorgegebene Toleranzbereich verändert wird (S30; S50), wenn in einen Kontaktmodus umgeschaltet wird, **dadurch gekennzeichnet, dass** der vorgegebene Toleranzbereich asymmetrisch um den Soll-Wert verändert wird,
wenn in den Kontaktmodus umgeschaltet wird,
wobei der vorgegebene Toleranzbereich in Richtung einer auf den Manipulator wirkenden Kontaktkraft vergrößert und/oder entgegen der Richtung einer auf den Manipulator wirkenden Kontaktkraft verkleinert wird, wenn in den Kontaktmodus umgeschaltet wird.

**2.** Verfahren nach Anspruch 1, **dadurch gekennzeichnet, dass** die Zustandsgröße eine Position (q), eine Ableitung einer Position nach der Zeit ($d^i/dt^i$) und/oder eine Kraft (τ) umfasst.

**3.** Verfahren nach einem der vorhergehenden Ansprüche, **dadurch gekennzeichnet, dass** der vorgegebene Toleranzbereich vergrößert oder verkleinert wird, wenn in den Kontaktmodus umgeschaltet wird.

**4.** Verfahren nach einem der vorhergehenden Ansprüche, **dadurch gekennzeichnet, dass** der vorgegebene Toleranzbereich über der Zeit (t) verändert wird, wenn in den Kontaktmodus umgeschaltet wird.

**5.** Verfahren nach einem der vorhergehenden Ansprüche, **dadurch gekennzeichnet, dass** der vorgegebene Toleranzbereich für eine bestimmte Zeitdauer (tmode) verändert wird, wenn in den Kontaktmodus umgeschaltet wird.

6. Verfahren nach einem der vorhergehenden Ansprüche, **dadurch gekennzeichnet, dass** die Zustandsgröße eine Position umfasst und der vorgegebene Toleranzbereich auf Basis einer Kraft bestimmt wird.

7. Steuervorrichtung für einen Manipulator, insbesondere einen Roboter (1), die zur Durchführung eines Verfahrens nach einem der vorhergehenden Ansprüche eingerichtet ist.

8. Computerprogramm, das ein Verfahren nach einem der Ansprüche 1 bis 6 ausführt, wenn es in einer Steuervorrichtung nach Anspruch 7 abläuft.

9. Computerprogrammprodukt mit Programmcode, der auf einem maschinenlesbaren Träger gespeichert ist und ein Computerprogramm nach Anspruch 8 umfasst.

**Claims**

1. A method for monitoring a manipulator, in particular a robot (1), comprising the steps:

   determining a set value (qsoll; $\tau$soll) of a state variable of the manipulator (S10);
   determining an actual value (q; $\tau$) of the state variable; and
   determining, whether the actual value is within a predetermined range of tolerance ({q}; {$\tau$}) around the set value (S70);
   wherein the predetermined range of tolerance is modified (S30; **S50),** when switching into a contact mode,
   **characterized in that**
   the predetermined range of tolerance is asymmetrically modified around the set value, when switching into the contact mode,
   wherein the predetermined range of tolerance is enlarged in a direction of a contact force that effects on the manipulator and/or reduced contrary to the direction of the contact force that effects on the manipulator, when switching into the contact mode.

2. The method according to claim 1, **characterized in that** the state variable comprises a position (q), a derivative of a position with respect to the time ($d^i/dt^i$) and/or a force ($\tau$).

3. The method according to one of the preceding claims, **characterized in that** the predetermined range of tolerance is enlarged or reduced, when switching into the contact mode.

4. The method according to one of the preceding claims, **characterized in that** the predetermined range of tolerance is modified over the time (t), when switching into the contact mode.

5. The method according to one of the preceding claims, **characterized in that** the predetermined range of tolerance is modified for a predetermined period of time (tmode), when switching into the contact mode.

6. The method according to one of the preceding claims, **characterized in that** the state variable comprises a position and the predetermined range of tolerance is determined on the basis of a force.

7. A control device for a manipulator, in particular a robot (1), which is arranged for carrying out a method according to one of the preceding claims.

8. A computer program, that executes a method according to one of the claims 1 to 6, when it runs on a control device according to claim 7.

9. A computer program product comprising program code, which is stored on a machine-readable medium and comprises a computer program product according to claim 8.

9

**Revendications**

1. Procédé de surveillance d'un manipulateur, en particulier d'un robot (1), comprenant les étapes consistant à :

   déterminer une valeur théorique (qsoll ; $\tau$soll) d'une grandeur d'état du manipulateur (S10) ;
   déterminer une valeur réelle (q ; $\tau$) de la grandeur d'état ; et
   déterminer si la valeur réelle se situe autour de la valeur théorique (S70) à l'intérieur d'une plage de tolérances prédéfinie ({q} ; {$\tau$}) ;
   la plage de tolérances prédéfinie étant modifiée (S30 ; S50) lorsque le manipulateur passe en mode contact,
   **caractérisé en ce que** la plage de tolérances prédéfinie est modifiée de manière asymétrique autour de la valeur théorique lorsque le manipulateur passe en mode contact,
   la plage de tolérances prédéfinie étant augmentée en direction d'une force de contact exercée sur le manipulateur et/ou étant diminuée à l'encontre de la direction d'une force de contact exercée sur le manipulateur lorsque ce dernier passe en mode contact.

2. Procédé selon la revendication 1, **caractérisé en ce que** la grandeur d'état englobe une position (q), une dérivée d'une position par rapport au temps ($d^i/dt^i$) et/ou une force ($\tau$).

3. Procédé selon l'une quelconque des revendications précédentes, **caractérisé en ce que** la plage de tolérances prédéfinie est augmentée ou diminuée lorsque le manipulateur passe en mode contact.

4. Procédé selon l'une quelconque des revendications précédentes, **caractérisé en ce que** la plage de tolérances prédéfinie est modifiée pendant le temps (t) lorsque le manipulateur passe en mode contact.

5. Procédé selon l'une quelconque des revendications précédentes, **caractérisé en ce que** la plage de tolérances prédéfinie est modifiée pendant une durée déterminée (tmode) lorsque le manipulateur passe en mode contact.

6. Procédé selon l'une quelconque des revendications précédentes, **caractérisé en ce que** la grandeur d'état englobe une position et la plage de tolérances prédéfinie est déterminée sur la base d'une force.

7. Dispositif de commande pour un manipulateur, en particulier un robot (1), qui est conçu pour mettre en oeuvre un procédé selon l'une quelconque des revendications précédentes.

8. Programme informatique qui exécute un procédé selon l'une quelconque des revendications 1 à 6 lorsqu'il se déroule dans un dispositif de commande selon la revendication 7.

9. Produit-programme informatique comprenant un code de programme qui est mis en mémoire sur un support lisible par ordinateur et un programme informatique selon la revendication 8.

Fig. 1

Fig. 2

Fig. 3

**Fig. 4**

S10
$$\{q\}=[q_{soll} - \varepsilon_q, \; q_{soll} + \varepsilon_q]$$
$$\{\tau\}=[\tau_{soll} - \varepsilon_\tau, \; \tau_{soll} + \varepsilon_\tau]$$

N — mode = "expect impact"?

S20

Y

$$\{q\}=[q_{soll} - \varepsilon_q + \Delta\varepsilon, \; q_{soll} + \varepsilon_q + \Delta\varepsilon]$$
$$\{\tau\}=[\tau_{soll} - \varepsilon_\tau - \Delta\varepsilon\tau, \; \tau_{soll} + \varepsilon_\tau - \Delta\varepsilon\tau]$$

S30

mode = "Impulse"? — N

Y S40

$$\{q\}=[q_{soll} - \varepsilon_q + \Delta\varepsilon, \; q_{soll} + \varepsilon_q + \Delta\varepsilon]$$
$$\{\tau\}=[\tau_{soll}, \; \tau_{soll} + \varepsilon_\tau]$$

S50

t > tmode? — Y

N S60

$$q \in \{q\}?$$
$$\tau \in \{\tau\}?$$
S70

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1600833 A2
- WO 0161618 A1
- WO 2006102517 A2
- EP 0159131 A2